Europäisches Patentamt

European Patent Office

Office européen des brevets

(19)

(11) **EP 1 383 354 A1**

(12) **DEMANDE DE BREVET EUROPEEN**

(43) Date de publication:
**21.01.2004 Bulletin 2004/04**

(51) Int Cl.⁷: $H04Q\ 11/04$

(21) Numéro de dépôt: **03291661.1**

(22) Date de dépôt: **04.07.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **11.07.2002 FR 0208727**

(71) Demandeur: **Evolium S.A.S.**
**75008 Paris (FR)**

(72) Inventeurs:
• **Gabriel, Anne**
**75014 Paris (FR)**
• **Agin, Pascal**
**94370 Sucy en Brie (FR)**

(74) Mandataire: **El Manouni, Josiane**
**Compagnie Financière Alcatel**
**Départememt de Propriété Industrielle,**
**5, rue Noel Pons**
**92734 Nanterre Cedex (FR)**

(54) **Procédé pour la mise en oeuvre d'un algorithme de controle d'admission dans un système de telecommunications**

(57) Un des objets de la présente invention est un procédé pour la mise en oeuvre d'un algorithme de contrôle d'admission dans un système de télécommunications, procédé dans lequel au moins un paramètre dudit algorithme est adapté dynamiquement en fonction d'un modèle de trafic représentatif des trafics en présence.

# FIG_2

| TRAFIC | Kvc |
|---|---|
| $75\%$ Parole($7\,ms, 10^{-4}$)+$25\%$ PS144($50\,ms, 10^{-4}$) | 0.74 |
| $50\%$ Parole($7\,ms, 10^{-4}$)+$50\%$ PS144($50\,ms, 10^{-4}$) | 0.78 |
| $25\%$ Parole($7\,ms, 10^{-4}$)+$75\%$ PS144($50\,ms, 10^{-4}$) | 0.8 |
| $75\%$ CS64($33\,ms, 10^{-4}$)+$25\%$ PS144($50\,ms, 10^{-4}$) | 0.74 |
| $50\%$ CS64($33\,ms, 10^{-4}$)+$50\%$ PS144($50\,ms, 10^{-4}$) | 0.76 |
| $25\%$ CS64($33\,ms, 10^{-4}$)+$75\%$ PS144($50\,ms, 10^{-4}$) | 0.8 |
| $100\%$ Parole($7\,ms, 10^{-4}$) | 0.9 |
| $100\%$ PS144($50\,ms, 10^{-4}$) | 0.8 |
| $100\%$ CS64($33\,m\,s, 10^{-4}$) | 0.9 |

EP 1 383 354 A1

## Description

La présente invention concerne d'une manière générale les systèmes de télécommunications, et plus particulièrement la gestion des ressources de transmission et de la qualité de service dans ces systèmes.

La présente invention est notamment applicable aux systèmes de radiocomunications mobiles, notamment de troisième génération, notamment de type UMTS (« Universal Mobile Télécommunication System »).

D'une manière générale, les systèmes de radiocommunications mobiles font l'objet de normalisation, et pour plus d'informations on pourra se référer aux normes correspondantes, publiées par les organismes de normalisation correspondants.

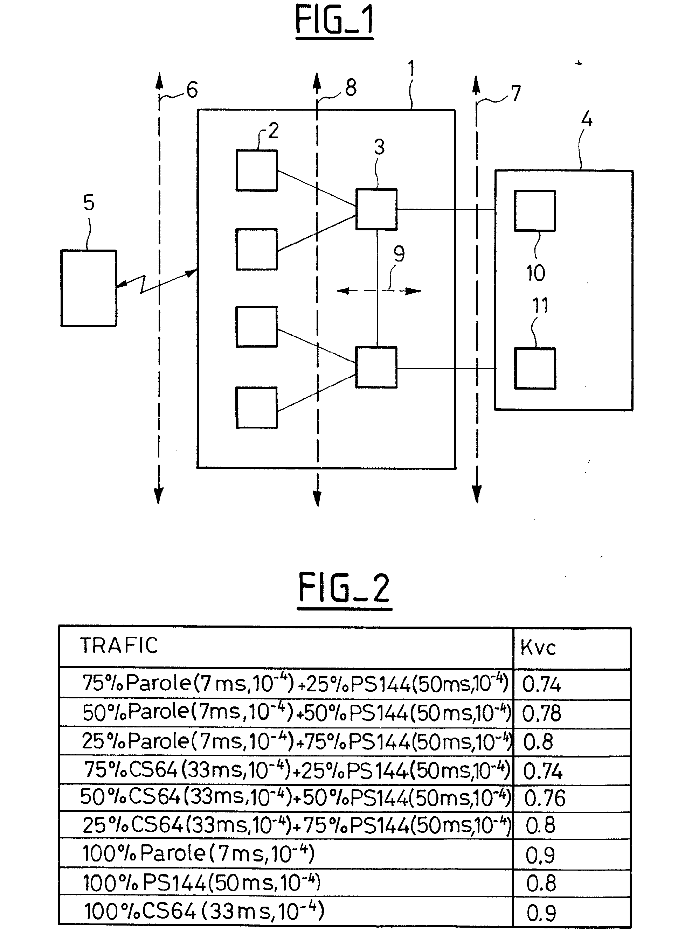

L'architecture générale de ces systèmes est rappelée sur la figure 1, elle comporte essentiellement :

- un réseau d'accès radio 1, ou RAN (pour « Radio Access Network »),
- un coeur de réseau 4, ou CN (pour « Core Network »).

Le RAN est formé de stations de base telles que 2 et de contrôleurs de stations de base tels que 3. Il est en relation d'une part avec des terminaux mobiles tels que 5, via une interface 6 appelée aussi interface radio, et d'autre part avec le CN 4 via une interface 7. A l'intérieur du RAN, les stations de base communiquent avec les contrôleurs de stations de base via une interface 8.

Dans les systèmes de type UMTS, le RAN est appelé UTRAN ("UMTS Terrestrial Radio Access Network »), les stations de base sont appelées « Node B », les contrôleurs de stations de base sont appelés RNC ("Radio Network Controller"), et les terminaux mobiles sont appelées UE (« User Equipment »). L'interface radio 6 est appelée « interface Uu », l'interface 7 est appelée interface « lu », l'interface 8 est appelée interface « lub », et une interface 9 entre RNCs est en outre introduite, appelée interface « lur ». Le CN contient essentiellement des entités ou noeuds de réseau, telles que notamment des entités 10 de type MSC (« Mobile Switching Center ») et des entités 11 de type SGSN (« Serving GPRS Serving Node» où GPRS est utilisé pour « Général Packet Radio Service»). L'interface entre RNC et MSC est aussi appelée interface « lu-CS » (où CS est utilisé pour « Circuit-Switched ») et l'interface entre RNC et SGSN est aussi appelée interface « lu-PS » (où PS est utilisé pour « Packet-Switched »).

Une technique de transport généralement utilisée dans l'UTRAN est la technique ATM (« Asynchronous Transfer Mode ») basée sur un multiplexage temporel asynchrone de petits paquets de taille fixe appelés cellules. D'une manière générale, la technique ATM fait l'objet de normalisation, et pour plus d'informations on pourra se référer aux normes correspondantes, publiées par les organismes de normalisation correspondants. On rappelle simplement qu'un réseau ATM peut être modélisé au moyen d'une couche dite couche ATM et d'une couche dite couche d'adaptation à l'ATM (ou couche AAL, pour « ATM Adaptation Layer ») placée entre la couche ATM et les utilisateurs. La couche ATM est orientée connexion, et réalise une transmission de cellules sur une connexion logique entre une source et une destination, cette connexion logique étant aussi appelée circuit virtuel ou VC (pour « Virtual Channel »).

Pour l'application de l'ATM au transport à l'intérieur de l'UTRAN, une couche AAL spécifique, appelée couche AAL2, est utilisée. Lorsqu'un UE communique avec l'UTRAN, une connexion logique correspondante, ou connexion AAL2, peut être établie sur une ou plusieurs des interfaces concernées de l'UTRAN, à savoir généralement les interfaces « lub », « lu-CS » et « lur ». Ces connexions AAL2 étant généralement à bas débit (du fait de la transmission à bas débit sur l'interface radio), plusieurs connexions AAL2 sont alors avantageusement multiplexées à l'intérieur d'une même connexion ATM ou circuit virtuel ATM.

Les besoins en ressources de transmission pour les différentes connexions AAL2 susceptibles d'être multiplexées sur un même circuit virtuel ATM peuvent être différents, du fait que ces connexions AAL2 peuvent correspondre à différents types de trafics ou services, pouvant avoir des besoins différents en qualité de service ou QoS (pour « Quality of Service »). On rappelle que dans un système tel que l'UMTS on distingue quatre classes de trafic : conversationnel, à flux continu (ou « streaming »), interactif, d'arrière plan (ou « background »). Pour chaque classe de trafic on distingue aussi différents paramètres de QoS, tels que notamment le délai de transmission maximum acceptable, la probabilité que le délai de transmission soit supérieur à ce délai maximum acceptable, le taux d'erreurs acceptable, ...etc . Dans l'exemple plus particulièrement considéré ici du transport à l'intérieur de l'UTRAN, la QoS cible, ou QoS requise pour un type de trafic ou service donné, est notamment représentée par un délai de transmission maximum et par une probabilité que le délai de transmission soit supérieur à ce délai maximum. Par exemple, pour un type de trafic correspondant à de la parole, la QoS cible peut être représentée par un délai de transmission maximum de 7ms et une probabilité égale à $10^{-4}$ que le délai de transmission soit supérieur à 7ms. Le délai de transmission maximum requis peut être différent pour différents types de trafics ou services. Par exemple le délai de transmission maximum requis pour un service de type téléphonie est inférieur au délai de transmission maximum requis pour un service de type vidéotéléphonie, qui est lui-même inférieur au délai de transmission maximum requis pour un service de type navigation sur le Web (ou « Web browsing »).

Un algorithme de contrôle d'admission de connexion (ou CAC, pour « Connexion Admission Control ») est généralement mis en oeuvre pour décider si les ressources de transmission sont suffisantes pour accepter une nouvelle requête de connexion AAL2, sur chaque interface concernée de l'UTRAN, tout en garantissant que la QoS requise est respectée.

L'algorithme de CAC est généralement basé sur le concept dit de bande passante équivalente ou EB (« pour « Equivalent Bandwidth »). Selon ce concept, on associe à chaque connexion AAL2 une largeur de bande équivalente, représentant la quantité de largeur de bande d'un circuit virtuel ATM qui est estimée nécessaire pour permettre de satisfaire la QoS cible pour le type de trafic ou service correspondant. L'algorithme de CAC consiste alors seulement à vérifier que la somme des largeurs de bande équivalente pour les connexions AAL2 déjà établies est inférieure à la largeur de bande équivalente du circuit virtuel ATM sur lequel elles sont multiplexées. Il est en outre communément admis d'utiliser un facteur de marge, correspondant à une charge maximale acceptable pour le circuit virtuel ATM. Ce facteur de marge permet essentiellement d'éviter les cas de surcharge, où le circuit virtuel ATM est surchargé et où les délais de transmission deviennent alors incontrôlables.

En d'autres termes, l'algorithme de CAC consiste à vérifier si la somme des largeurs de bande équivalente des connexions AAL2 déjà établies sur le circuit virtuel ATM vérifie l'inégalité suivante :

$$\sum EB(i) \leq K_{VC} \times EB_{VC}$$

où :

- EB(i) est la largeur de bande équivalente requise par une connexion AAL2 établie sur le circuit virtuel ATM, pour le type de service "i", pour une QoS cible donnée, représentée notamment par un délai de transmission maximum donné et par une probabilité donnée que le délai de transmission soit supérieur à ce délai de transmission maximum,
- $K_{VC}$ est le facteur de marge, correspondant à la charge maximale acceptable pour le circuit virtuel ATM ($K_{VC}$ ayant typiquement une valeur comprise entre 0.7 et 0.9),
- $EB_{VC}$ est la largeur de bande équivalente du circuit virtuel ATM sur lequel les connexions AAL2 sont multiplexées. Par exemple, dans le cas de classe de service ATM correspondant à la classe dite à débit de bits constant ou CBR ("Constant Bit Rate") la largeur de bande équivalente du circuit virtuel ATM est égale au débit maximal de cellules ou débit-crête ou PCR ("Peak Cell Rate").

Pour l'exposé de l'invention, on utilisera la notion de "modèle de trafic". Dans l'exemple d'application au transport à l'intérieur de l'UTRAN, un modèle de trafic peut inclure des paramètres de QoS (tels que délai de transmission maximum et probabilité que le délai de transmission soit supérieur au délai de transmission maximum) pour chaque type de trafic pouvant être multiplexé à l'intérieur d'un circuit virtuel, et, dans le cas de différents types de trafics, des proportions pour ces différents types de trafics.

Le facteur de marge, ou charge maximale acceptable pour le circuit virtuel ATM, est généralement déterminé par simulation, pour un modèle de trafic donné, en augmentant la charge du circuit virtuel, jusqu'à ce que les contraintes de délai maximum pour les connexions AAL2 ne soient plus respectées, ce qui signifie que la charge maximale est atteinte.

Ainsi que l'a observé le demandeur, un problème est que la règle rappelée précédemment, sur laquelle est basée l'algorithme de CAC, reste la même, et notamment le facteur de marge reste le même, pour tous les modèles de trafic possibles.

Or la charge maximale acceptable pour le circuit virtuel ATM, afin de satisfaire la QoS cible pour les différentes connexions AAL2 multiplexées sur ce circuit virtuel, peut être différente pour différents modèles de trafic, et dépend aussi de la QoS cible associée à chaque type de trafic ou service.

Ceci signifie que si on choisit une valeur de $K_{VC}$ qui doit rester valide pour tous les modèles de trafic possibles, il est raisonnable de choisir cette valeur pour le modèle de trafic qui est le plus contraignant. En d'autres termes, on choisit le modèle de trafic qui requiert la charge maximale la plus faible pour le circuit virtuel. Mais ceci signifie aussi que pour un modèle de trafic différent du modèle de trafic pour lequel la valeur de $K_{VC}$ a ainsi été optimisée, l'algorithme de CAC refusera certaines connexions, qui auraient en réalité pu être acceptées et pour lesquelles la QoS cible aurait été satisfaite. En d'autres termes, ceci ne permet pas d'utiliser au mieux la largeur de bande du circuit virtuel pour tous les modèles de trafic possibles, ou encore en d'autres termes l'utilisation des ressources de transmission à l'intérieur de l'UTRAN n'est pas optimisée.

En d'autres termes, selon l'art antérieur ainsi rappelé, on sélectionne de manière fixe un des différents modèles de trafic possibles, pour lequel on détermine (par simulations ou mesures ou calcul) la charge maximale acceptable pour le circuit virtuel. Une solution raisonnable est alors de sélectionner le modèle de trafic qui requiert la valeur minimale pour la charge maximale acceptable pour le circuit virtuel.

Une telle solution n'est pas satisfaisante, pour les raisons exposées ci-dessus, notamment car il peut y avoir un grand nombre de modèles de trafic possibles, ou en d'autres termes il peut y avoir un grand nombre de combinaisons possibles pour les types de trafic et leurs proportions, par exemple (la liste ci-dessous n'étant bien sûr pas limitative):

- 100 % AMR (toute la charge étant pour du trafic de type AMR ou « Adaptive Multi-Rate »),

- 100 % CS64 (toute la charge étant pour du trafic de type CS64, c'est-à-dire en mode circuit (ou CS, pour « Circuit Switched ») à 64 kbps),
- 100 % PS64 (toute la charge étant pour du trafic de type PS64, c'est-à-dire en mode paquet (ou PS, pour « Packet Switched ») à 64 kbps),
- 100 % PS128 (toute la charge étant pour du trafic de type PS128, c'est-à-dire en mode paquet à 128 kbps),
- 100 % PS144 (toute la charge étant pour du trafic de type PS144, c'est-à-dire en mode paquet à 144 kbps),
- 100 % PS384 (toute la charge étant pour du trafic de type PS384, c'est-à-dire en mode paquet à 384 kbps),
- 50 % AMR + 50 % PS64 (50 % de la charge étant pour du trafic de type AMR, et 50 % de la charge étant pour du trafic de type PS64),
- 25 % AMR + 75 % PS128 (25 % de la charge étant pour du trafic de type AMR, et 75 % de la charge étant pour du trafic de type PS128),
- ...etc.

Une autre raison pour laquelle cette solution antérieure n'est pas satisfaisante est que la charge maximale acceptable pour le circuit virtuel dépend aussi de la QoS cible associée à chaque type de trafic ou service. Par exemple, même dans le cas d'un seul type de trafic ou service, la charge maximale acceptable pour le circuit virtuel sera différente selon la QoS cible associée à ce type de trafic ou service. Par exemple, la QoS cible pouvant être représentée par un couple (délai de transmission maximum, probabilité que le délai de transmission soit supérieur au délai de transmission maximum), selon le type de trafic ou service la QoS cible peut correspondre par exemple à $(7ms, 10^{-4})$ ou $(7ms, 10^{-5})$ ou $(10ms, 10^{-4})$...etc.

Cette infinité de modèles de trafic possibles fait qu'il est impossible d'assurer que le modèle de trafic pour lequel la charge maximale du circuit virtuel a été optimisée sera le seul modèle de trafic utilisé dans le réseau.

La présente invention a notamment pour but d'éviter tout ou partie des inconvénients mentionnés précédemment. Plus généralement, la présente invention a pour but d'optimiser l'utilisation des ressources de transmission dans ces systèmes, tout en respectant les contraintes de QoS.

Bien que la présentation ci-dessus ait été faite plus particulièrement, à titre d'exemple, pour le cas d'utilisation d'algorithme de CAC pour le contrôle d'admission de connexion AAL2 sur un circuit virtuel ATM, notamment pour l'application au transport à l'intérieur de l'UTRAN, la présente invention n'est pas limitée à une telle application et peut bien entendu être utilisée dans tout cas où un algorithme de contrôle d'admission peut être utilisé pour prévenir des phénomènes de congestion provoqués par un trafic supérieur à celui que le système peut supporter. De tels algorithmes de contrôle d'admission peuvent ainsi être utilisés, non seulement pour le multiplexage de connexions AAL2 dans un circuit virtuel ATM, mais aussi dans tout noeud d'un réseau en mode paquet, ou encore sur l'interface radio d'un système de type CDMA (« Code Division Multiple Access »), ...etc. On rappelle qu'en mode paquet les ressources de transmission sont partagées à tout instant par différents utilisateurs, contrairement au mode circuit où les ressources sont allouées de manière fixe à différents utilisateurs. Par exemple, dans un système de type UMTS, un contrôle d'admission peut également être effectué dans un élément de coeur de réseau, en mode paquet (ou PS, pour « Packet Switched ») pour décider si les ressources de transmission sont suffisantes dans cet élément de réseau pour accepter un nouvel appel. On rappelle aussi que dans les systèmes CDMA les limitations de capacité sur l'interface radio sont différentes de ce qu'elles sont dans les systèmes utilisant d'autres techniques d'accès multiple, telles que notamment la technique TDMA ("Time Division Multiple Access"). La technique TDMA est notamment utilisée dans les systèmes dits de deuxième génération tels que notamment le système GSM ("Global System for Mobile communications"). La technique CDMA est notamment utilisée dans les systèmes dits de troisième génération tels que notamment le système UMTS. Dans les systèmes CDMA, tous les utilisateurs partagent la même ressource de fréquence à tout instant. La capacité de ces systèmes est donc limitée par les interférences, ces systèmes étant aussi appelés pour cette raison "soft limited systems" (en anglais). Par exemple, dans un système de type UMTS, un contrôle d'admission peut également être effectué, pour décider si les ressources radio sont suffisantes dans un Node B pour accepter un nouvel appel.

Un des objets de la présente invention est un procédé pour la mise en oeuvre d'un algorithme de contrôle d'admission dans un système de télécommunications, procédé dans lequel au moins un paramètre dudit algorithme est adapté dynamiquement en fonction d'un modèle de trafic représentatif des trafics en présence.

Suivant une autre caractéristique, ledit modèle de trafic inclut un ou plusieurs paramètres représentatifs du ou des types de trafic en présence.

Suivant une autre caractéristique, des paramètres représentatifs de type de trafic incluent des paramètres représentatifs de besoins en qualité de service (QoS) pour ce type de trafic.

Suivant une autre caractéristique, des paramètres représentatifs de besoins en qualité de service incluent un délai de transmission maximum et une probabilité que le délai de transmission soit supérieur à ce délai de transmission maximum.

Suivant une autre caractéristique, des paramètres représentatifs de type de trafic incluent des paramètres représentatifs de besoins en ressources de transmission, à qualité de service (QoS) donnée, pour ce type de trafic.

Suivant une autre caractéristique, des paramètres représentatifs de besoins en resources de transmission, à qualité de service (QoS) donnée, incluent un facteur d'activité de connexions.

Suivant une autre caractéristique, dans le cas de différents types de trafic en présence, ledit modèle de trafic inclut des proportions pour ces différents types de trafic.

Suivant une autre caractéristique, ledit au moins un paramètre correspond à un facteur de marge correspondant à une charge maximale admissible.

Suivant une autre caractéristique, ledit au moins un paramètre correspond à une bande passante équivalente.

Suivant une autre caractéristique, la valeur dudit au moins un paramètre est choisie parmi différentes valeurs dites de référence, optimisées pour différents modèles de trafic dits de référence.

Suivant une autre caractéristique, pour le cas de modèle de trafic ne correspondant pas à un des modèles de trafic de référence, on détermine un modèle de trafic de référence qui en constitue la meilleure approximation.

Suivant une autre caractéristique, pour le cas de modèle de trafic ne correspondant pas à un des modèles de trafic de référence, on détermine un modèle de trafic de référence qui en constitue la meilleure approximation, tout en étant le plus contraignant. Suivant une autre caractéristique, ledit procédé comporte:

- une première étape au cours de laquelle on détermine des modèles de trafic de référence, et des valeurs correspondantes dites de référence pour ledit au moins un paramètre.

Suivant une autre caractéristique, lesdites valeurs de référence sont déterminées par des simulations ou mesures.

Suivant une autre caractéristique, lesdites valeurs de référence sont déterminées par calcul.

Suivant une autre caractéristique, ledit procédé comporte:

- une deuxième étape au cours de laquelle on stocke des modèles de trafic de référence et des valeurs de référence correspondantes, dans une mémoire.

Suivant une autre caractéristique, ledit procédé comporte:

- une troisième étape au cours de laquelle on estime un modèle de trafic représentatif des trafics en présence.

Suivant une autre caractéristique, ladite estimation comporte une estimation de types de trafic en présence, et, dans le cas de différents types de trafic en présence, une estimation de proportions pour ces différents types de trafic.

Suivant une autre caractéristique, ladite estimation comporte des opérations d'estimation de types de trafic en présence, réalisées à partir d'informations contenues dans des messages de signalisation reçus par un élément de réseau d'au moins un autre élément de réseau.

Suivant une autre caractéristique, ladite estimation comporte des opérations d'estimation de proportions de types de trafic en présence, réalisées par mesure ou comptage de trafic.

Suivant une autre caractéristique, un modèle de trafic représentatif des trafics en présence est ré-estimé à chaque nouvel établissement de connexion et à chaque nouveau relâchement de connexion.

Suivant une autre caractéristique, un modèle de trafic représentatif des trafics en présence est ré-estimé au bout d'une durée prédéterminée. Suivant une autre caractéristique, ledit procédé comporte:

- une quatrième étape au cours de laquelle on choisit parmi les modèles de trafic de référence celui qui approxime le mieux le modèle de trafic estimé pendant la troisième étape.

Suivant une autre caractéristique, ledit procédé comporte:

- une quatrième étape au cours de laquelle on choisit parmi les modèles de trafic de référence celui qui approxime le mieux le modèle de trafic estimé pendant la troisième étape, tout en étant le plus contraignant.

Suivant une autre caractéristique, ledit procédé comporte:

- une cinquième étape au cours de laquelle on modifie dynamiquement ledit au moins un paramètre dudit algorithme en fonction du ou des paramètres correspondant au modèle de trafic de référence choisi pendant la quatrième étape.

Suivant une autre caractéristique, une modification n'est effectuée que dans le cas de changement significatif de valeur dudit au moins un paramètre.

Suivant une autre caractéristique, ledit procédé comporte:

- une sixième étape au cours de laquelle on met en oeuvre ledit algorithme avec ledit au moins un paramètre modifié pendant la cinquième étape.

Suivant une autre caractéristique, ledit procédé est utilisé pour le contrôle d'admission de connexions AAL2 sur un circuit virtuel ATM.

Suivant une autre caractéristique, ledit procédé est utilisé pour le contrôle d'admission de connexions AAL2 sur un circuit virtuel ATM sur une interface de type « lub » dans un réseau de type UTRAN.

Suivant une autre caractéristique, ledit procédé est utilisé pour le contrôle d'admission de connexions AAL2 sur un circuit virtuel ATM sur une interface de type « lu-CS » dans un réseau de type UTRAN.

Suivant une autre caractéristique, ledit procédé est utilisé pour le contrôle d'admission de connexions AAL2 sur un circuit virtuel ATM sur une interface de type « lur » dans un réseau de type UTRAN.

Suivant une autre caractéristique, ledit procédé est utilisé pour le contrôle d'admission dans un réseau en mode paquet.

Suivant une autre caractéristique, ledit procédé est utilisé pour le contrôle d'admission sur l'interface radio d'un système de type CDMA.

Un autre objet de la présente invention est un élément de réseau d'accès radio pour système de radiocommunications mobiles, comportant des moyens adaptés pour mettre en oeuvre un tel procédé.

Un autre objet de la présente invention est un contrôleur de stations de base (RNC) pour système de radiocommunications mobiles, comportant des moyens adaptés pour mettre en oeuvre un tel procédé.

Un autre objet de la présente invention est une station de base (Node B) pour système de radiocommunications mobiles, comportant des moyens adaptés pour mettre en oeuvre un tel procédé.

Un autre objet de la présente invention est un élément de coeur de réseau pour système de radiocommunications mobiles, comportant des moyens adaptés pour mettre en oeuvre un tel procédé.

D'autres objets et caractéristiques de la présente invention apparaîtront à la lecture de la description suivante d'un exemple de réalisation, faite en relation avec les dessins ci-annexés dans lesquels:

- la figure 1 rappelle l'architecture générale d'un système de radiocommunications mobiles,
- la figure 2 est un tableau donnant des exemples de valeurs de facteur de marge obtenues pour différents modèles de trafic possibles.

L'invention peut aussi être expliquée de la manière suivante, à titre d'exemple pour le cas de l'algorithme de CAC appliqué au transport à l'intérieur de l'UTRAN. Cependant, comme indiqué précédemment, l'invention n'est pas limitée à une telle application.

L'invention propose d'optimiser l'algorithme de CAC de manière qu'au moins un paramètre de cet algorithme soit adapté dynamiquement en fonction d'un modèle de trafic représentatif des trafics en présence. Une telle adaptation dynamique permet notamment d'optimiser l'utilisation des ressources de transmission.

Les trafics en présence correspondent aux trafics pris en compte par l'algorithme de CAC lorsqu'il décide si une nouvelle requête de connexion peut être acceptée. Dans cet exemple, les trafics en présence correspondent aux trafics pouvant être multiplexés à l'intérieur d'un circuit virtuel ATM.

Un modèle de trafic peut notamment inclure un ou plusieurs paramètres représentatifs du ou des types de trafics en présence.

La notion de "type de trafic" est ici utilisée au sens où un type de trafic peut être représenté par tout paramètre ou combinaison de paramètres pouvant caractériser le comportement de ce trafic, pour l'algorithme de CAC. Par exemple, de tels paramètres peuvent être pris dans la liste (non exhaustive) de paramètres suivants: facteur d'activité, débit maximal, débit moyen, débit minimal, délai maximal et probabilité que le délai soit supérieur à ce délai maximal, taux d'erreur, ...etc. Notamment, dans le cas de l'application au transport à l'intérieur de l'UTRAN, un type de trafic peut être représenté notamment par le couple de paramètres suivants représentatifs de besoins en qualité de service: délai de transmission maximum, probabilité que le délai de transmission soit supérieur au délai de transmission maximum.

Dans le cas de trafics en présence de différents types, un modèle de trafic peut aussi inclure des proportions pour ces différents types de trafics.

En d'autres termes l'invention propose, notamment, de sélectionner dynamiquement la valeur d'au moins un paramètre de l'algorithme de CAC, de manière que cette valeur corresponde à une valeur optimisée pour chaque modèle de trafic. De telles valeurs optimisées pour chaque modèle de trafic peuvent être déterminées par des simulations ou mesures, d'autres solutions étant bien entendu possibles, par exemple par le calcul.

A défaut de pouvoir disposer de valeurs dudit au moins un paramètre de l'algorithme de CAC optimisées pour chaque modèle de trafic possible (notamment dans le cas de grand nombre de combinaisons possibles pour les types de trafic et leurs proportions), on peut disposer de certaines valeurs dites de référence, optimisées pour certains modèles dits de référence. Il est possible de prévoir une table dans laquelle sont stockées de telles valeurs de référence et les modèles de référence qui leur correspondent.

Une telle méthode permet ainsi de sélectionner dynamiquement une valeur dudit au moins un paramètre de l'algorithme de CAC, en trouvant dans la table une valeur correspondant à un modèle de trafic. Pour le cas de modèle de trafic ne correspondant pas à un des modèles de référence, on peut déterminer un modèle de référence qui en constitue la meilleure approximation. On peut aussi déterminer le modèle de référence qui en constitue la meilleure approximation tout en étant le plus contraignant, c'est à dire qui conduit à accepter le moins de connexions ou à admettre la charge la plus faible.

Un procédé suivant l'invention, pour adapter dynamiquement un ou plusieurs paramètres de l'algorithme de CAC en fonction du modèle de trafic, peut par exemple comporter les étapes suivantes:

1. on détermine par avance des modèles de trafic de référence, pour lesquels on détermine (par exemple par calcul, simulation, mesure) des valeurs de référence du ou des paramètres à adapter de l'algorithme de CAC,

2. on stocke ces modèles de trafic de référence et les valeurs de référence associées, dans une mémoire,

3. on estime un modèle de trafic représentatif des trafics en présence,

4. on choisit parmi les modèles de trafic de référence celui qui approxime le mieux le modèle de trafic estimé pendant l'étape 3, et éventuellement on peut choisir le modèle de trafic de référence qui est le plus contraignant pour l'algorithme de CAC,

5. on modifie dynamiquement le ou les paramètres de l'algorithme de CAC en fonction de la valeur du ou des paramètres de l'algorithme de CAC correspondant au modèle de trafic de référence choisi pendant l'étape 4,

6. on met en oeuvre l'algorithme de CAC avec les paramètres modifiés pendant l'étape 5.

Le modèle de trafic peut être ré-évalué à chaque nouvel établissement de connexion et à chaque nouveau relâchement de connexion. Ce mécanisme peut aussi, par exemple, présenter une boucle pour passer régulièrement de l'étape 6 à l'étape 3, pour ré-évaluer régulièrement le modèle de trafic représentatif des trafics réellement en présence, au bout d'une certaine durée, afin d'adapter l'évolution de la modification dynamique du ou des paramètres de l'algorithme de CAC à l'évolution du changement de modèle de trafic en présence, en fonction du temps. Ladite durée peut être un paramètre configurable, qui peut être choisi à la fois suffisamment faible pour obtenir de meilleures performances pour l'algorithme de CAC, et suffisamment élevé pour ne pas trop augmenter la quantité de traitements. Par exemple, le modèle de trafic pourra être ré-évalué en fonction de l'heure de la journée, ou du jour de la semaine, ...etc.

D'autres variantes peuvent être envisagées, par exemple la possibilité de répéter l'étape 2, par exemple en ajoutant d'autres modèles de trafic de référence, ou en modifiant les modèles de référence déjà stockés. Cette modification peut par exemple être basée sur des observations sur le trafic, telles que celles pouvant être effectuées pour estimer un modèle de trafic au cours de l'étape 3.

On peut également vouloir éviter de faire des modifications trop souvent du ou des paramètres de l'algorithme de CAC, et pour cela, on peut introduire des seuils de variation (qui peuvent être configurables) pour chacun des paramètres, afin de les modifier seulement si un changement significatif de ces paramètres est nécessaire, ou vouloir interdire des changements trop rapides de ces paramètres, par exemple en fixant une durée minimale (qui peut être configurable) entre deux changements successifs des paramètres de l'algorithme de CAC.

Un procédé suivant l'invention peut être mis en oeuvre dans tout élément de réseau. Il peut notamment s'agir du même élément de réseau que celui dans lequel est mis en oeuvre l'algorithme de CAC. Dans l'exemple d'application au transport à l'intérieur de l'UTRAN, un procédé suivant l'invention peut ainsi être mis en oeuvre dans un élément de réseau d'accès radio tel que RNC ou Node B, ou encore dans un élément du coeur de réseau, ou encore dans tout élément de réseau ayant intérêt à vérifier qu'il a les ressources nécessaires au niveau transport avant d'accepter une demande d'établissement de connexion.

Notamment un élément de réseau mettant en oeuvre un procédé selon l'invention peut comporter une mémoire pour stocker les modèles et valeurs de référence, et des moyens pour effectuer les étapes d'estimation de modèle de trafic en présence, de choix de modèle de trafic de référence, de modification dynamique de paramètre(s) de l'algorithme de CAC, et de mise en oeuvre de l'algorithme de CAC avec de tel(s) paramètre(s) modifié(s) si l'élément de réseau considéré est celui mettant en oeuvre l'algorithme de CAC.

Généralement, un élément de réseau mettant en oeuvre l'algorithme de CAC n'a pas connaissance du modèle de trafic représentatif des trafics en présence. Pour évaluer un tel modèle de trafic représentatif des trafics en présence sur l'interface terrestre sur laquelle il doit mettre en oeuvre cet algorithme, il peut utiliser tous moyens tels que par exemple des compteurs de trafic, ou encore utiliser des informations sur le trafic contenues dans des messages de signalisation reçues d'au moins un autre élément de réseau. Plus généralement, pour estimer un modèle de trafic représentatif des trafics en présence, un élément de réseau peut utiliser tout moyen permettant d'estimer les types de trafic en présence, et dans le cas de différents types de trafic en présence, les proportions pour ces différents types de trafic.

Par exemple l'élément de réseau qui met en oeuvre l'algorithme de CAC peut être : le CRNC (« Controlling RNC ») sur l'interface « Iub » (mais ce peut également être le Node B), le SRNC (« Serving RNC ») et un élément du coeur de réseau sur l'interface « Iu », le SRNC sur l'interface « Iur ».

On rappelle que pour un Node B donné, le RNC qui le contrôle est aussi appelé CRNC (pour « Controlling Radio Network Controller »). Le CRNC a un rôle de contrôle de charge et d'allocation de ressources radio pour les Node B qu'il contrôle. Pour une communication donnée relative à un équipement utilisateur UE donné, il existe un RNC, appelé SRNC (pour « Serving Radio Network Controller ») ayant un rôle de contrôle pour la communication considérée. Des Node B connectés à l'UE mais non contrôlés par le SRNC communiquent avec le SRNC via les RNC qui les contrôlent, appelés aussi DRNC (pour « Drift RNC »).

Le moyen d'estimer le modèle de trafic peut être différent selon que l'élément de réseau qui met en oeuvre l'algorithme de CAC est le SRNC ou le CRNC.

Par exemple, lorsque l'élément de réseau qui met en oeuvre l'algorithme de CAC est le SRNC, il peut par exemple utiliser des informations sur le trafic contenues dans des messages de signalisation qu'il reçoit du coeur de réseau sur l'interface « Iu » selon le protocole de communication RANAP (« Radio Access Network Application Part ») ou selon le protocole « Iu Frame Protocol ».

Le SRNC peut également utiliser des informations sur le trafic contenues dans des messages de signalisation qu'il reçoit du Node B sur l'interface « Iub » selon le protocole de communication NBAP (« Node B Application Part ») ou selon le protocole « Iub Frame Protocol».

Le SRNC peut également utiliser tous moyens tels que des compteurs donnant des informations sur le trafic sur les interfaces radio, ou « Iub », ou « Iu ».

Par exemple, lorsque l'élément de réseau qui met en oeuvre l'algorithme de CAC est le CRNC, il peut par exemple utiliser des informations sur le trafic contenues dans des messages de signalisation qu'il reçoit du SRNC sur l'interface « Iur » selon le protocole de communication RNSAP (« Radio Network System Application Part ») ou selon le protocole « Iur Frame Protocol».

Le CRNC peut également utiliser des informations sur le trafic contenues dans des messages de signalisation qu'il reçoit du Node B sur l'interface « Iub » selon le protocole de communication NBAP ou selon le protocole « Iub Frame Protocol ».

Le CRNC peut également utiliser tous moyens tels que des compteurs donnant des informations sur le trafic sur les interfaces radio, ou « Iur », ou « Iub ».

Le protocole RANAP est défini notamment dans la spécification 3G TS 25.413, le protocole NBAP est défini notamment dans la spécification 3G TS 25.433, le protocole RNSAP est défini notamment dans la spécification 3G TS 25.433, le protocole « Iu Frame Protocol » est défini notamment dans la spécification 3G TS 25.415, et le protocole « Iub/Iur Frame Protocol » est défini notamment dans la spécification 3G TS 25.427, toutes ces spécifications étant publiées par le 3GPP (« 3rd Génération Partnership Project »).

Pour les messages reçus selon le protocole RANAP,il peut notamment s'agir des messages dits de « RAB Assignment Request » donnant, pour chaque requête d'allocation de support d'accès radio, ou RAB (« Radio Access Bearer»), des informations sur le type de trafic ou service correspondant, dans des paramètres appelés paramètres RAB (ces paramètres incluant notamment le débit maximum, la classe de trafic, le délai de transmission, ou encore un paramètre appelé SSD (« Source Statistics Descriptor »)).

Par ailleurs, pour déterminer des paramètres tels que le délai de transmission maximum et la probabilité que le délai de transmission soit supérieur au délai de transmission maximum, pouvant caractériser un type de trafic dans une telle application, on pourra aussi utiliser des informations configurées par O&M (« Opération & Maintenance ») dans un élément de réseau.

Par ailleurs, en UMTS le paramètre "délai de transmission maximum" peut être choisi en fonction du paramètre "TOAWS" (« Time Of Arrivai Window Start »), paramètre défini dans la norme 3GPP UMTS , qui représente la largeur de la fenêtre de réception dans le Node B, pour le sens descendant, et qui sert pour la synchronisation (référence 3GPP TS 25.402)

Par ailleurs le paramètre "probabilité que le délai soit supérieur au délai maximum" peut être choisi en fonction du taux de perte de paquets AAL2 ou du taux de perte de cellules ATM visé sur l'interface « Iub » pour le transport des données des utilisateurs.

Notamment, ledit au moins un paramètre de l'algorithme de CAC peut correspondre au facteur de marge $K_{vc}$. Cet exemple de paramètre est celui considéré plus particulièrement dans la présente demande, mais d'autres exemples seraient bien entendu possibles. Par exemple, on peut faire varier la bande passante équivalente, par exemple en fonction du facteur d'activité des connexions.

On peut ainsi, par exemple, adapter dynamiquement la bande passante équivalente des connexions, par exemple des connexions de voix pour un service de type AMR, pour un délai maximum donné et une probabilité donnée que le délai soit supérieur au délai maximum, en fonction du facteur d'activité de la voix, ou plus généralement en fonction de paramètre(s) représentatif(s) de besoins en ressources de transmission, à qualité de service (QoS) donnée. On peut ainsi par exemple prévoir une table pour stocker des valeurs de référence de la bande passante équivalente. L'élément de réseau mettant en oeuvre un tel procédé peut , par exemple, mesurer dynamiquement le facteur d'activité moyen des connexions de voix, par exemple à partir de l'évaluation de la proportion de trames vides par rapport à des trames de voix, et ainsi adapter dynamiquement la bande passante équivalente utilisée pour la voix en fonction d'un facteur d'activité moyen observé pour l'ensemble des connexions de voix.

On notera aussi que la bande passante équivalente peut être égale à zéro (ou à une valeur très faible), par exemple dans le cas d'un service paquet qui a peu de contraintes de délai.

Dans ce qui suit, on s'intéressera plus particulièrement, à titre d'exemple, au cas où le dit au moins un paramètre de l'algorithme de CAC est le facteur de marge $K_{vc}$.

A titre d'exemple, la figure 2 donne des exemples, obtenus par simulations, de charge maximale acceptable pour le circuit virtuel, pour différents modèles de trafic possibles. Un modèle de trafic inclut en l'occurrence les paramètres suivants représentatifs du ou des types de trafics en présence : délai de transmission maximum, probabilité que le délai de transmission soit supérieur au délai de transmission maximum, et, pour le cas de différents types de trafics en présence, un modèle de trafic inclut en outre des proportions pour ces différents types de trafics. Plus précisément les modèles de trafic illustrés sur la figure 2 sont les suivants:

- pour le cas de trafics multiplexés de même type:

  ➢ 100% Parole (7ms, $10^{-4}$)
  ➢ 100% PS 144 (50ms, $10^{-4}$)
  ➢ 100 % CS64 (33ms, $10^{-4}$)

- pour le cas de trafics multiplexés de types différents:

  ➢ 75% Parole (7ms, $10^{-4}$) + 25 % PS144 (50ms, $10^{-4}$)
  ➢ 50% Parole (7ms, $10^{-4}$) + 50 % PS144 (50ms, $10^{-4}$)
  ➢ 25% Parole (7ms, $10^{-4}$) + 75 % PS144 (50ms, $10^{-4}$)
  ➢ 75% CS64 (33ms, $10^{-4}$) + 25 % PS144 (50ms, $10^{-4}$)
  ➢ 50% CS64 (33ms, $10^{-4}$) + 50 % PS144 (50ms, $10^{-4}$)
  ➢ 25% CS64 (33ms, $10^{-4}$) + 75 % PS144 (50ms, $10^{-4}$).

Ces différents modèles de trafics et les différentes valeurs de $K_{vc}$ qui leur correspondent peuvent par exemple constituer les modèles et valeurs de référence pour le procédé exposé précédemment.

La figure 2 peut aussi être utilisée pour comparer l'invention à l'art antérieur.

Selon l'art antérieur tel que rappelé précédemment, on choisit une valeur de $K_{vc}$ qui doit être valide pour tous les modèles de trafic possibles . Une solution raisonnable est alors de choisir le modèle de trafic le plus contraignant, soit, dans l'exemple de la figure 2, le cas correspondant à 75 % parole + 25 % PS144, conduisant à un choix de la valeur 0.74 pour la valeur de $K_{vc}$. Ce choix interdit alors de charger le circuit virtuel à plus de 74 %. Un inconvénient est alors que pour un autre modèle de trafic, par exemple le modèle correspondant à 25 % CS64 + 75 % PS 144, on aurait en réalité pu charger le circuit virtuel à 80 %, de sorte que l'utilisation des ressources de transmission n'est pas optimisée pour tous les cas possibles.

La présente invention permet d'éviter de tels inconvénients en sélectionnant dynamiquement $K_{vc}$ selon le modèle de trafic. Un tel choix dynamique de la valeur de $K_{vc}$ permet ainsi d'accroître la capacité de transmission (de 0 % à 22 % dans l'exemple de la figure 2), l'augmentation de capacité de transmission étant fonction du modèle de trafic. En d'autres termes, un avantage de fixer dynamiquement la valeur de $K_{vc}$ est d'être capable d'accepter plus de connexions avec l'algorithme de CAC, qu'on aurait pu en accepter avec une valeur fixe de $K_{vc}$, tout en garantissant en même temps que leurs contraintes de qualité de service sont respectées. Ceci permet donc d'augmenter les performances de l'algorithme de CAC.

**Revendications**

1. Procédé pour la mise en oeuvre d'un algorithme de contrôle d'admission dans un système de télécommunications, procédé dans lequel au moins un paramètre dudit algorithme est adapté dynamiquement en fonction d'un modèle de trafic représentatif des trafics en présence.

2. Procédé selon la revendication 1, dans lequel ledit modèle de trafic inclut un ou plusieurs paramètres représentatifs du ou des types de trafic en présence.

3. Procédé selon la revendication 2, dans lequel des paramètres représentatifs de type de trafic incluent des paramètres représentatifs de besoins en qualité de service (QoS) pour ce type de trafic.

4. Procédé selon la revendication 3, dans lequel des paramètres représentatifs de besoins en qualité de service incluent un délai de transmission maximum et une probabilité que le délai de transmission soit supérieur à ce délai de transmission maximum.

5. Procédé selon la revendication 2, dans lequel des paramètres représentatifs de type de trafic incluent des paramètres représentatifs de besoins en ressources de transmission, à qualité de service (QoS) donnée, pour ce type de trafic.

6. Procédé selon la revendication 5, dans lequel des paramètres représentatifs de besoins en resources de transmission, à qualité de service (QoS) donnée, incluent un facteur d'activité de connexions.

7. Procédé selon l'une des revendications 1 à 6, dans lequel, dans le cas de différents types de trafic en présence, ledit modèle de trafic inclut des proportions pour ces différents types de trafic.

8. Procédé selon l'une des revendications 1 à 7, dans lequel ledit au moins un paramètre correspond à un facteur de marge correspondant à une charge maximale admissible.

9. Procédé selon l'une des revendications 1 à 7, dans lequel ledit au moins un paramètre correspond à une bande passante équivalente.

10. Procédé selon l'une des revendications 1 à 9, dans lequel la valeur dudit au moins un paramètre est choisie parmi différentes valeurs dites de référence, optimisées pour différents modèles de trafic dits de référence.

11. Procédé selon la revendication 10 , dans lequel, pour le cas de modèle de trafic ne correspondant pas à un des modèles de trafic de référence, on détermine un modèle de trafic de référence qui en constitue la meilleure approximation.

12. Procédé selon la revendication 10, dans lequel, pour le cas de modèle de trafic ne correspondant pas à un des modèles de trafic de référence, on détermine un modèle de trafic de référence qui en constitue la meilleure approximation, tout en étant le plus contraignant.

13. Procédé selon l'une des revendications 1 à 12, comportant:

   - une première étape au cours de laquelle on détermine des modèles de trafic de référence, et des valeurs correspondantes dites de référence pour ledit au moins un paramètre.

14. Procédé selon la revendication 13, dans lequel lesdites valeurs de référence sont déterminées par des simulations ou mesures.

15. Procédé selon la revendication 13, dans lequel lesdites valeurs de référence sont déterminées par calcul.

16. Procédé selon l'une des revendications 13 à 15, comportant :

   - une deuxième étape au cours de laquelle on stocke des modèles de trafic de référence et des valeurs de référence correspondantes, dans une mémoire.

17. Procédé selon l'une des revendications 13 à 16, comportant:

   - une troisième étape au cours de laquelle on estime un modèle de trafic représentatif des trafics en présence.

18. Procédé selon la revendication 17, dans lequel ladite estimation comporte une estimation de types de trafic en présence, et, dans le cas de différents types de trafic en présence, des proportions pour ces différents types de trafic.

19. Procédé selon la revendication 18, dans lequel ladite estimation comporte des opérations d'estimation de types de trafic en présence, réalisées à partir d'informations sur le trafic contenues dans des messages de signalisation reçus par un élément de réseau d'au moins un autre élément de réseau.

20. Procédé selon la revendication 18, dans lequel ladite estimation comporte des opérations d'estimation de proportions pour différents types de trafic, réalisées par mesure ou comptage de trafic.

21. Procédé selon l'une des revendications 17 à 20, dans lequel un modèle de trafic représentatif des trafics en présence est ré-estimé à chaque nouvel établissement de connexion et à chaque nouveau relâchement de connexion.

22. Procédé selon l'une des revendications 17 à 20, dans lequel un modèle de trafic représentatif des trafics en présence est ré-estimé au bout d'une durée prédéterminée.

23. Procédé selon l'une des revendications 13 à 22, comportant:

   - une quatrième étape au cours de laquelle on choisit parmi les modèles de trafic de référence celui qui approxime le mieux le modèle de trafic estimé pendant la troisième étape.

24. Procédé selon l'une des revendications 13 à 23, comportant:

   - une quatrième étape au cours de laquelle on choisit parmi les modèles de trafic de référence celui qui approxime le mieux le modèle de trafic estimé pendant la troisième étape, tout en étant le plus contraignant.

25. Procédé selon l'une des revendications 13 à 24, comportant:

   - une cinquième étape au cours de laquelle on modifie dynamiquement ledit au moins un paramètre dudit algorithme en fonction du ou des paramètres correspondant au modèle de trafic de référence choisi pendant la quatrième étape.

26. Procédé selon la revendication 25, dans lequel une modification n'est effectuée que dans le cas de changement significatif de valeur dudit au moins un paramètre.

27. Procédé selon l'une des revendications 13 à 26, comportant:

    -  une sixième étape au cours de laquelle on met en oeuvre ledit algorithme avec ledit au moins un paramètre modifié pendant la cinquième étape.

28. Procédé selon l'une des revendications 1 à 27, utilisé pour le contrôle d'admission de connexions AAL2 sur un circuit virtuel ATM.

29. Procédé selon la revendication 28, utilisé pour le contrôle d'admission de connexions AAL2 sur un circuit virtuel ATM sur une interface de type « Iub » dans un réseau de type UTRAN.

30. Procédé selon la revendication 28, utilisé pour le contrôle d'admission de connexions AAL2 sur un circuit virtuel ATM sur une interface de type « Iu-CS » dans un réseau de type UTRAN.

31. Procédé selon la revendication 28, utilisé pour le contrôle d'admission de connexions AAL2 sur un circuit virtuel ATM sur une interface de type « Iur » dans un réseau de type UTRAN.

32. Procédé selon l'une des revendications 1 à 27, utilisé pour le contrôle d'admission dans un réseau en mode paquet.

33. Procédé selon l'une des revendications 1 à 27, utilisé pour le contrôle d'admission sur l'interface radio d'un système de type CDMA.

34. Élément de réseau d'accès radio pour système de radiocommunications mobiles, comportant des moyens adaptés pour mettre en oeuvre un procédé selon l'une des revendications 1 à 33.

35. Contrôleur de stations de base (RNC) pour système de radiocommunications mobiles, comportant des moyens adaptés pour mettre en oeuvre un procédé selon l'une des revendications 1 à 33.

36. Station de base (Node B) pour système de radiocommunications mobiles, comportant des moyens adaptés pour mettre en oeuvre un procédé selon l'une des revendications 1 à 33.

37. Élément de coeur de réseau pour système de radiocommunications mobiles, comportant des moyens adaptés pour mettre en oeuvre un procédé selon l'une des revendications 1 à 33.

## FIG_1

## FIG_2

| TRAFIC | Kvc |
|---|---|
| $75\%$ Parole $(7\,ms, 10^{-4}) + 25\%$ PS144 $(50\,ms, 10^{-4})$ | 0.74 |
| $50\%$ Parole $(7\,ms, 10^{-4}) + 50\%$ PS144 $(50\,ms, 10^{-4})$ | 0.78 |
| $25\%$ Parole $(7\,ms, 10^{-4}) + 75\%$ PS144 $(50\,ms, 10^{-4})$ | 0.8 |
| $75\%$ CS64 $(33\,ms, 10^{-4}) + 25\%$ PS144 $(50\,ms, 10^{-4})$ | 0.74 |
| $50\%$ CS64 $(33\,ms, 10^{-4}) + 50\%$ PS144 $(50\,ms, 10^{-4})$ | 0.76 |
| $25\%$ CS64 $(33\,ms, 10^{-4}) + 75\%$ PS144 $(50\,ms, 10^{-4})$ | 0.8 |
| $100\%$ Parole $(7\,ms, 10^{-4})$ | 0.9 |
| $100\%$ PS144 $(50\,ms, 10^{-4})$ | 0.8 |
| $100\%$ CS64 $(33\,ms, 10^{-4})$ | 0.9 |

**Office européen des brevets**

**RAPPORT DE RECHERCHE EUROPEENNE**

Numéro de la demande

EP 03 29 1661

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | WO 00 33606 A (NORTEL NETWORKS CORP.) 8 juin 2000 (2000-06-08) * abrégé; figures 1-4,,7A,7B * * page 12, ligne 17 - page 14, ligne 10 * * page 15, ligne 12 - page 16, ligne 25 * | 1 | H04Q11/04 |
| Y | *Idem* | 2-37 | |
| Y | REN Q ET AL: "A HYBRID MODEL AND MEASUREMENT BASED CONNECTION ADMISSION CONTROL AND BANDWIDTH ALLOCATION SCHEME FOR ATM NETWORKS" IEEE GLOBECOM 1998. GLOBECOM '98. THE BRIDGE TO GLOBAL INTEGRATION. SYDNEY, NOV. 8 - 12, 1998, IEEE GLOBAL TELECOMMUNICATIONS CONFERENCE, NEW YORK, NY: IEEE, US, vol. 4, 8 novembre 1998 (1998-11-08), pages 2030-2038, XP000894404 ISBN: 0-7803-4985-7 * page 2031, alinéa 2 - page 2035, alinéa 3 * | 2-37 | |
| A | FODOR G ET AL: "Comparison of call admission control algorithms in ATM/AAL2 based 3generation mobile access networks" WIRELESS COMMUNICATIONS AND NETWORKING CONFERENCE, 1999. WCNC. 1999 IEEE NEW ORLEANS, LA, USA 21-24 SEPT. 1999, PISCATAWAY, NJ, USA,IEEE, US, 21 septembre 1999 (1999-09-21), pages 1508-1512, XP010353713 ISBN: 0-7803-5668-3 * le document en entier * | 28-31 | |

DOMAINES TECHNIQUES RECHERCHES (Int.Cl.7)

H04Q
H04L

-/--

Le présent rapport a été établi pour toutes les revendications

| Lieu de la recherche | Date d'achèvement de la recherche | Examinateur |
|---|---|---|
| BERLIN | 1 octobre 2003 | Danielidis, S |

**Office européen des brevets**

# RAPPORT DE RECHERCHE EUROPEENNE

Numéro de la demande

EP 03 29 1661

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 889 656 A (NORTHERN TELECOM LTD) 7 janvier 1999 (1999-01-07) * abrégé; figures 6,10,13,20; tableaux 1,2 * * page 7, ligne 56 - page 8, ligne 19 * --- | 1-37 | |
| A | EP 0 862 299 A (NEC CORP.) 2 septembre 1998 (1998-09-02) * abrégé; revendication 1; figure 1 * * page 19, ligne 1 - page 22, ligne 10 * --- | 1 | |
| A | US 5 521 971 A (KEY ET AL.) 28 mai 1996 (1996-05-28) * abrégé; figures 1,4 * * colonne 2, ligne 67 - colonne 5, ligne 45 * --- | 1-37 | |
| A | WO 00 07406 A (SUBBIAH) 10 février 2000 (2000-02-10) * abrégé; figure 7 * * page 8, ligne 36 - page 10, ligne 13 * ----- | 1 | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| BERLIN | 1 octobre 2003 | Danielidis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**   EP 03 29 1661

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-10-2003

| Document brevet cité au rapport de recherche | | Date de publication | Membre(s) de la famille de brevet(s) | | Date de publication |
|---|---|---|---|---|---|
| WO 0033606 | A | 08-06-2000 | US | 6490249 B1 | 03-12-2002 |
| | | | AU | 1401900 A | 19-06-2000 |
| | | | CA | 2350544 A1 | 08-06-2000 |
| | | | EP | 1133893 A1 | 19-09-2001 |
| | | | WO | 0033606 A1 | 08-06-2000 |
| EP 889656 | A | 07-01-1999 | US | 5970064 A | 19-10-1999 |
| | | | CA | 2230424 A1 | 12-12-1998 |
| | | | EP | 0889656 A2 | 07-01-1999 |
| | | | JP | 11017704 A | 22-01-1999 |
| EP 862299 | A | 02-09-1998 | US | 6046981 A | 04-04-2000 |
| | | | CA | 2230633 A1 | 28-08-1998 |
| | | | EP | 0862299 A2 | 02-09-1998 |
| | | | JP | 3070677 B2 | 31-07-2000 |
| | | | JP | 10276222 A | 13-10-1998 |
| US 5521971 | A | 28-05-1996 | SG | 43032 A1 | 17-10-1997 |
| | | | AU | 681023 B2 | 14-08-1997 |
| | | | AU | 2145795 A | 10-11-1995 |
| | | | CA | 2186619 A1 | 26-10-1995 |
| | | | CN | 1145709 A | 19-03-1997 |
| | | | DE | 69513513 D1 | 30-12-1999 |
| | | | DE | 69513513 T2 | 15-06-2000 |
| | | | EP | 0755599 A1 | 29-01-1997 |
| | | | WO | 9528787 A1 | 26-10-1995 |
| | | | JP | 9512144 T | 02-12-1997 |
| | | | NZ | 283422 A | 29-01-1997 |
| | | | US | 6084955 A | 04-07-2000 |
| WO 0007406 | A | 10-02-2000 | AU | 4863699 A | 21-02-2000 |
| | | | EP | 1145587 A2 | 17-10-2001 |
| | | | WO | 0007406 A2 | 10-02-2000 |

EPO FORM P0460

Pour tout renseignement concernant cette annexe : voir Journal Officiel de l'Office européen des brevets, No.12/82